# FASCICULE DE BREVET EUROPEEN

(11) **EP 0 478 423 B1**
(45) Date de publication et mention de la délivrance du brevet: **01.06.1994**
(21) Numéro de dépôt: 91402499.7
(22) Date de dépôt: 19.09.1991
(51) Int. Cl.: B60S 1/24

(54) **Boite à rotule, notamment pour essuie-glace**
Kugelgelenk-Gehäuse für Scheibenwischer
Ball- and socket joint for windscreen wiper

(30) Priorité: 24.09.1990 FR 9011753
(43) Date de publication de la demande: 01.04.1992
(73) Titulaire: VALEO SYSTEMES D'ESSUYAGE, 78180 Montigny-Le-Bretonneux (FR)
(72) Inventeur: Gagneux, Georges, F-86100 Chatellerault (FR); Boissac, Jean-Paul, Lycée Marcelin Berthelot, F-86100 Chatellerault (FR)
(74) Mandataire: Gamonal, Didier

(56) Documents cités:
- EP-A- 0 058 278
- CH-A- 301 309
- FR-A- 2 176 294
- FR-A- 2 608 233
- US-A- 3 704 903

## Description

La présente invention a pour objet une tringle de transmission utilisée notamment dans des timoneries d'essuie-glace.

Une timonerie d'essuie-glace est utilisée pour transmettre un mouvement moteur issu d'un arbre d'un moto-réducteur à au moins un axe d'entraînement de balai d'essuie-glace et comporte essentiellement une multiplicité de tringles reliées les unes aux autres.

Pour des raisons d'implantation l'arbre du moto-réducteur est situé dans un plan non parallèle à celui passant par l'axe d'entraînement du balai, ce qui nécessite de relier les diverses tringles par des liaisons à rotule permettant, outre la rotation d'une tringle par rapport à l'autre, une certaine inclinaison angulaire entre deux tringles.

Ces liaisons à rotule sont constituées par une rotule portée par une extrémité d'une tringle pénétrant à articulation dans une boîte à rotule portée par une autre extrémité d'une autre tringle.

A partir d'une extrémité et comme cela est décrit dans le document US-A-3 704 903, il est prévu un orifice, généralement perpendiculaire au plan de cette extrémité, et apte à porter une boîte à rotule par surmoulage.

Pour ce faire, il est prévu, concentriquement à l'orifice, des rainures circonférentielles partielles permettant, lors du surmoulage, l'introduction de la matière de moulage dans ces rainures en autorisant ainsi un ancrage de la boîte à rotule dans cette extrémité en interdisant tout mouvement circonférentiel parasite de cette boîte à rotule.

La Demanderesse a cependant constaté que cette réalisation présentait un inconvénient majeur.

En effet, lors de l'opération de surmoulage, la quantité de matière plastique moulée est différente de part et d'autre du plan longitudinal de l'extrémité de la tringle et à son voisinage, ce qui se concrétise, lors du refroidissement de cette matière et par suite de cette dissymétrie de moulage, par un retrait de moulage qui conduit à obtenir des parties de moindre épaisseur irrégulièrement réparties pouvant entraîner un mauvais ancrage de la boîte à rotule.

La présente invention a pour objet de pallier cet inconvénient.

Selon la présente invention, la tringle de transmission d'un mouvement présentant à au moins l'une de ses extrêmités un orifice dans lequel est surmoulée une boîte à rotule est caractérisée en ce que des fentes radiales sont prévues à partir du bord de l'orifice de manière à créer des languettes qui sont repliées axialement.

Ainsi, non seulement la surface de contact entre le métal et la matière plastique est accrue ce qui permet une fixation plus solide, mais l'injection de quantité de matière plastique est effectuée de manière identique de part et d'autre du plan de l'extrémité de la tringle de sorte que lors du refroidissement les retraits se produisent symétriquement et la matière conserve une épaisseur également répartie autour de l'orifice.

D'autres caractéristiques et avantages de l'invention apparaîtront au cours de la description qui va suivre d'un mode de réalisation particulier, donné à titre d'exemple non limitatif en regard des dessins qui représentent :
- la figure 1, une vue en perspective d'une extrêmité d'une tringle plate de transmission de mouvement selon la présente invention ;
- la figure 2, une vue de détail en coupe selon la ligne II-II de la figure 1 ;
- la figure 3, une vue en coupe d'une boîte à rotule fermée, après surmoulage sur la tringle ;
- la figure 4, une vue en coupe d'une boîte à rotule ouverte ;
- la figure 5, une vue en coupe d'une variante de l'extrêmité d'une tringle de transmission de mouvement constituée par un tube ;
- la figure 6, une vue en élévation de la figure 5 ;

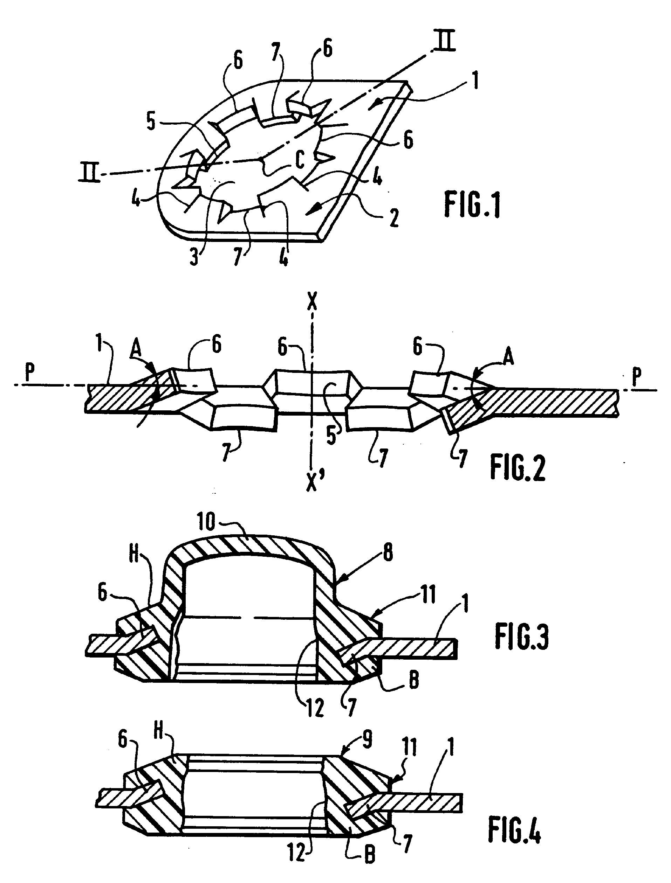

Sur les figures 1 et 2, on distingue, en perspective pour la figure 1, l'une 1 des extrémités d'une tringle plate 2 de transmission de mouvement élaborée à partir d'une feuille métallique et percée d'un orifice 3 de forme générale circulaire et de disposition d'axe XX′ sensiblement perpendiculaire au plan longitudinal P passant par l'une des faces externes de l'extrémité 1 de la tringle 2 permettant de raccorder la tringle à un organe moteur ou utilisateur (non représenté) par l'intermédiaire d'une boîte à rotule qui sera décrite par la suite.

Conformément à l'invention, on pratique, par exemple par poinçonnage, dans la matière constitutive de l'extrémité 1 et cela autour de l'orifice 3 au moins quatre fentes 4, ici douze, réparties à égale distance circonférentiellement l'une de l'autre, les fentes 4, étant dans l'exemple représenté, de direction radiale passant par le centre C de l'orifice 3 et débouchant sur le bord circonférentiel 5 dudit orifice en créant ainsi des languettes de formes trapézoïdales dont les petites bases sont confondues avec le bord circonférentiel 5.

Comme mieux visible sur les figures 1 et 2, les languettes 6 sont ensuite alternativement repliées axialement et par rapport au plan longitudinal P vers le haut pour les languettes 6 et vers le bas pour les languettes 7 de manière à ce qu'une languette 6 soit entourée par deux languettes 7 et vice-versa.

Bien entendu, les languettes 6 et 7 sont repliées selon un même angle A par rapport au plan P ici un angle A de l'ordre de 20°.

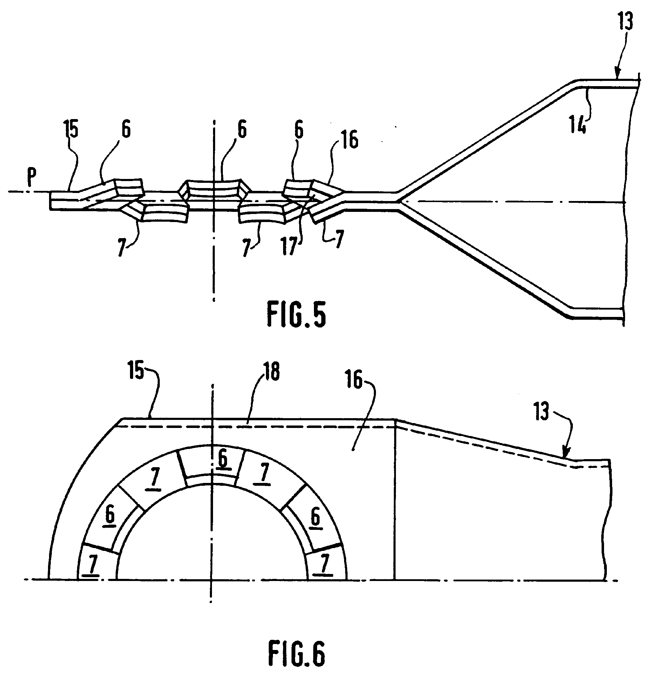

C'est sur cette couronne de languettes pliées que va être effectué le surmoulage d'une matière plastique de manière à constituer une boîte à rotule ouverte 8 ou fermée 9 à sa partie supérieure comme cela est montré sur les figures 3 et 4.

La figure 3 représente une boîte à rotule surmoulée 8 fermée à sa partie supérieure 10 et comportant un bord périphérique 11 venant recouvrir entièrement les languettes 6 et 7 de part et d'autre des surfaces externes de l'extrémité 1, ladite boîte à rotule présentant une paroi interne 12 en forme de secteur sphérique sur laquelle vient s'enclipser la rotule (non représentée) d'une tringle correspondante.

La répartition et l'inclinaison des languettes 6 et 7 assurent une régularité de l'épaisseur finale après le retrait de la matière constitutive de la boîte à rotule dû à son refroidissement et à sa solidification, c'est-à-dire que l'épaisseur circulaire des zones H et B est sensiblement la même puisque dans ces zones la même quantité de matière a été injectée et que le retrait s'est effectué dans les mêmes conditions.

La figure 4 représente une boîte à rotule ouverte surmoulée et la description qui précède est également applicable dans ce cas.

Dans les exemples représentés, le nombre de languettes 6 est égal à six, de même que le nombre de languettes 7, mais ce nombre peut être quelconque.

La figure 5 représente une variante dans laquelle la tringle de transmission 13 est constituée par un tube cylindrique creux 14 dont au moins une des extrémités est conformée de manière à obtenir une extrémité 15 à surfaces plates.

Pour obtenir la tringle représentée sur les figures 5 et 6, l'extrémité 15 du tube, qui, à l'état initial est de forme cylindrique, est écrasée de manière à obtenir deux surfaces planes 16 et 17 en contact l'une avec l'autre et raccordées par leurs bords longitudinaux par une bourrelet 18, ou à partir du diamètre initial de l'extrémité du tube à aplatir, l'extrémité dudit tube est évasée de manière à obtenir une extrémité cylindrique de tube de plus grand diamètre, qui est ensuite écrasée de manière à obtenir les deux surfaces planes 16 et 17 précédemment décrites.

Comme précédemment décrit pour les figures 1 et 2, un orifice 3 est prévu simultanément à travers les surfaces 16 et 17 et des languettes 6, 7 sont comme déjà décrit prévues autour de l'orifice 3 en étant successivement pliées alternativement axialement, chaque languette 6 ou 7 étant constituée par des parties de surfaces 16 et 17.

Ces réalisations ont pour avantage, en considérant une tringle plate issue d'une feuille métallique, de réduire le diamètre du tube par rapport à la dimension de la boîte à rotule destinée à être surmoulée dans l'orifice et sur les languettes.

Le surmoulage d'une boîte à rotule fermée 8 ou ouverte 9 est ensuite effectué comme indiqué précédemment et le résultat est identique.

Il va de soi que de nombreuses variantes peuvent être introduites, notamment par substitution de moyens techniquement équivalents sans pour autant sortir du cadre de l'invention.

Notamment, il peut être prévu que la forme des languettes 6 et 7 soit différente de celle d'un trapèze, telle que celle résultant d'une disposition de fentes 4 ne passant pas par le centre C de l'orifice 3.

## Revendications

1. Tringle de transmission de mouvement, notamment pour timonerie d'essuie-glace, présentant au moins à l'une (1,15) de ses extrémités un orifice (3) dans lequel est surmoulée une boîte à rotule (8,9), caractérisée en ce que des fentes radiales (4) sont prévues à partir du bord (5) de l'orifice (3) de manière à créer des languettes (6,7) qui sont repliées axialement.

2. Tringle de transmission selon la revendication 1, caractérisée en ce que les fentes (4) sont régulièrement réparties autour de l'orifice (3).

3. Tringle de transmission selon la revendication 1 ou 2, caractérisée en ce que les fentes (4) ont une direction radiale passant par le centre (C) de l'orifice (3).

4. Tringle de transmission selon l'une des revendications précédentes, caractérisée en ce que les languettes (6,7) sont repliées axialement alternativement du même angle (A) de part et d'autre du plan (P) passant par l'une des faces externes de l'extrémité (1,15).

5. Tringle de transmission selon l'une des revendications précédentes, caractérisée en ce que l'angle (A) est de l'ordre de 20°.

6. Tringle de transmission selon l'une des revendications précédentes, caractérisée en ce qu'une languette (6) repliée axialement dans une direction est entourée par deux languettes (7) repliées axialement dans l'autre direction et vice-versa.

7. Tringle de transmission selon l'une des revendications précédentes, caractérisée en ce que l'extrémité (1) de la tringle (2) est issue d'un feuillard métallique.

8. Tringle de transmission selon l'une des revendications précédentes, caractérisé en ce que l'extrémité (15) de la tringle (13) est issue de l'aplatissement complet d'un tube creux (14).

9. Tringle de transmission selon l'une des revendications précédentes, caractérisée en ce que l'extrémité (15) de la tringle (13) est issue d'un évasage puis de l'aplatissement complet d'un tube creux.

10. Tringle de transmission selon l'une des revendications précédentes, caractérisée en ce que l'orifice (3) les fentes (4) et les languettes (7,8) sont pratiqués conjointement à travers les deux surfaces planes (16,17) formant l'extrémité (15).

## Patentansprüche

1. Antriebsstange, insbesondere für Scheibenwischergestänge, die mindestens an einem (1, 15) ihrer Enden eine Öffnung (3) aufweist, in der ein Kugelgelenk-Gehäuse (8, 9) aufgeformt wird , **dadurch** **gekennzeichnet**, daß ausgehend von der Kante (5) der Öffnung (3) radiale Schlitze (4) vorgesehen sind, so daß Zungen (6, 7) entstehen, die axial umgebogen werden.

2. Antriebsstange nach Anspruch 1, **dadurch** **gekennzeichnet**, daß die Schlitze (4) gleichmäßig um die Öffnung (3) herum verteilt sind.

3. Antriebsstange nach Anspruch 1 oder 2, **dadurch** **gekennzeichnet**, daß die Schlitze (4) in einer radialen, durch den Mittelpunkt (C) der Öffnung (3) verlaufenden Richtung angeordnet sind.

4. Antriebsstange nach einem der vorangehenden Ansprüche, **dadurch** **gekennzeichnet**, daß die Zungen (6, 7) abwechselnd axial um den gleichen Winkel (A) auf beiden Seiten der Längsebene (P) umgebogen werden, die durch eine der Außenseiten des Endes (1, 15) verläuft.

5. Antriebsstange nach einem der vorangehenden Ansprüche, **dadurch** **gekennzeichnet**, daß der Winkel (A) in einer Größenordnung von 20° liegt.

6. Antriebsstange nach einem der vorangehenden Ansprüche, **dadurch** **gekennzeichnet**, daß eine axial in einer Richtung umgebogene Zunge (6) von zwei Zungen (7) umgeben ist, die axial in der jeweils anderen Richtung umgebogen sind, und umgekehrt.

7. Antriebsstange nach einem der vorangehenden Ansprüche, **dadurch** **gekennzeichnet**, daß das Ende (1) der Stange (2) aus einer Metallplatte stammt.

8. Antriebsstange nach einem der vorangehenden Ansprüche, **dadurch** **gekennzeichnet**, daß das Ende (15) der Stange (13) aus der vollständigen Abflachung eines hohlen Rohres (14) stammt.

9. Antriebsstange nach einem der vorangehenden Ansprüche, **dadurch** **gekennzeichnet**, daß das Ende (15) der Stange (13) aus einer Ausweitung mit anschließender vollständiger Abflachung eines hohlen Rohres stammt.

10. Antriebsstange nach einem der vorangehenden Ansprüche, **dadurch** **gekennzeichnet**, daß die Öffnung (3), die Schlitze (4) und die Zungen (7, 8) gleichzeitig in den zwei flachen Flächen (16, 17), die das Ende (15) bilden, angebracht werden.

## Claims

1. A motion transmitting coupling link, especially for a windscreen wiper linkage, having, in at least one (1, 15) of its ends, a hole (3) in which a ball socket (8, 9) is moulded, characterised in that radial slits (4) are provided, extending from the edge (5) of the hole (3) so as to define tongues (6, 7) which are bent out axially.

2. A motion transmission coupling link according to Claim 1, characterised in that the slits (4) are spaced regularly around the hole (3).

3. A motion transmitting coupling link according to Claim 1 or Claim 2, characterised in that the slits (4) extend radially in a direction passing through the centre (C) of the hole (3).

4. A motion transmitting coupling link according to one of the preceding Claims, characterised in that the tongues (6, 7) are bent out axially in alternate directions at a common angle (A) on either side of the plane (P) passing through one of the outer faces of the end (1, 15).

5. A motion transmitting coupling link according to one of the preceding Claims, characterised in that the angle (A) is of the order of 20 degrees.

6. A motion transmitting coupling link according to one of the preceding Claims, characterised in that a tongue (6) bent out axially in one direction lies between two tongues (7) which are bent out axially in the other direction, and vice versa.

7. A motion transmitting coupling link according to one of the preceding Claims, characterised in that the end (1) of the coupling link (2) is formed from a flat metal plate.

8. A motion transmitting coupling link according to one of the preceding Claims, characterised in that the end (15) of the coupling link (13) is formed by fully flattening a hollow tube (14).

9. A motion transmitting coupling link according to one of the preceding Claims, characterised in that the end (15) of the coupling link (13) is formed by radial expansion, followed by complete flattening, of a hollow tube.

10. A motion transmitting coupling link according to one of the preceding Claims, characterised in that the hole (3), the slits (4), and the tongues (7, 8) are formed jointly through both of the flat surfaces (16, 17) defining the end (15).
